# EUROPEAN PATENT APPLICATION

(11) **EP 1 017 188 A2**
(43) Date of publication of application: **05.07.2000**
(21) Application number: 99309988.6
(22) Date of filing: 10.12.1999
(51) Int. Cl.: H04B 7/185

(54) **Method and system for high speed data access from remote locations**

(30) Priority: 30.12.1998 US 223091
(71) Applicant: LUCENT TECHNOLOGIES INC., Murray Hill, New Jersey 07974-0636 (US)
(72) Inventor: Byers, Charles Calvin, Aurora, Illinois 60504 (US); Davies, Bryan Russell, Yurora, Illinois 60504 (US); Paulson, William Brohmer, Naperville, Illinois 60540 (US)
(74) Representative: Johnston, Kenneth Graham

(57) **Abstract**

A high speed data network access system for passengers allows access to a global or private data network via data links. In one illustrative embodiment, the system relies on interconnections between aircraft along an established air corridor for interconnecting a passenger with a ground station with data network access. Radiators disposed on the external fuselage of the aircraft allow optical or radio links to be established among aircraft and the ground station. Advantageously, passengers flying on long routes, such as transoceanic flights are able to efficiently access a global data network (e.g., the Internet) with minimal delay.

## Description

### Technical Field:

This invention relates to data networking systems and, more particularly, to providing travelers with high speed data network access.

### Background of the Invention:

The explosive growth of information technology represents modem society's expectation for substantially instantaneous and seamless access to data. The decreased costs associated with personal computers and the enhanced efficiency of data transmission also makes data network access a viable option for almost everyone. Although data network access is now commonplace for even unsophisticated "surfers of the net", those who rely on information for business view connectivity as a necessity. For example, businesses increasingly rely on data networks for up-to-date information about stocks, competitors, vendors or inventory. Electronic mail is another staple of the business world, which now operates across so many time zones that telephone conversations may soon become rare.

Although technology makes face-to-face meetings less necessary, some business travel is still required. Indeed, as businesses become global, long journeys to meet clients, review progress or culminate business deals are expected. To maximize efficiency on these trips, many business travelers use laptop computers so that the entire travel time does not result in a loss of productivity. Many of the software applications on these laptop computers require connection to a data network for obtaining information or connecting to an electronic mail server. The existing method of providing access to data networks on flights, for example, requires a voice band modem over an air-to-ground telephone network. Typically, these air-to-ground facilities are slow and allow only a limited number of simultaneous connections by a single aircraft. During transoceanic flights, there are even more limitations for those wishing to connect to a data network.

As common carriers; especially airlines, seek a greater share of the lucrative business travel market, services for enhancing passenger convenience become differentiators which result in greater profits. Therefore, there is a desire for innovative service provisions in the travel industry.

### Summary of the Invention:

Service and safety, especially for airline passengers, is improved by providing reliable, efficient high speed data network access. More particularly, airline operations benefit from efficient data transmission to all aircraft along a defined flight path. Passenger entertainment services are improved via on board access to a variety of entertainment systems and airline safety is enhanced by the ability to download "black box" data while in flight.

Aircraft traveling along a particular air traffic route form a data network chain for receiving and forwarding messages among ground stations and other aircraft moving along the air traffic route. More particularly, each aircraft in the route is in constant contact with the plane preceding it and following it. The first and last "anchor" aircraft along the route maintain contact with a ground station. As aircraft take off and land, and are routed by air traffic control to a particular route, new aircraft join the data network chain using a process analogous to cellular telephone handoffs.

Each aircraft is equipped with a local area network outlet to interconnect with the plane's data switching gear and two or more antenna or optical assemblies (hereinafter, radiators) attached to the aircraft's external fuselage. The radiators provide steerable, directional links to other aircraft or ground stations. A relatively small number of ground stations support the air to data connection network. These stations are located where transoceanic air routes make landfall or in close proximity to major airports. Each ground station includes a number of radiator links for receiving data from the aircraft. The ground station may also include high performance data routers, high speed connections to a data network, servers and encryption equipment for connecting to private data networks. In the preferred embodiment, overall system control for features like capacity management, screening, billing and content hosting are also located at the ground station.

Data messages traverse the data network chain in both the forward and aft directions to provide full duplex connectivity. In the event that a link between aircraft temporarily loses viability, the link in the opposite direction carries the message in a manner analogous to the behavior of synchronous optical network (SONET) bi-directional rings. In this manner, all aircraft maintain connectivity to at least one data network entry point.

Advantageously, data loads are balanced over the forward and aft direction links to maximize throughput. Linking of data networking capability among aircraft allows passengers traveling along segments of a long route to maintain connections to a global or private data network service via links to other aircraft along the route, which are in close proximity to a ground station. If after satisfying all aircraft and passenger needs, there is supplemental bandwidth, the extra data carrying capacity may be used by commercial or government users to augment the bandwidth of transcontinental cables or provide redundancy in case of cable damage.

### Brief Description of the Drawings:

FIG. 1 is a simplified diagram of a high speed data access system for aircraft;
FIG. 2 is a simplified block diagram of the aircraft components required for high speed data network access;
FIG. 3 is a simplified block diagram of a ground station in a high speed data access system;
FIG. 4 is a flow diagram illustrating the steps performed in the systems of FIGs. 1, 2 and 3 for allowing passenger connectivity to a data network; and
FIGs. 5 and 6 are flow diagrams illustrating the steps performed in the systems of FIGs. 1, 2 and 3 when there is a change in aircraft along a specified air traffic route.

### Detailed Description:

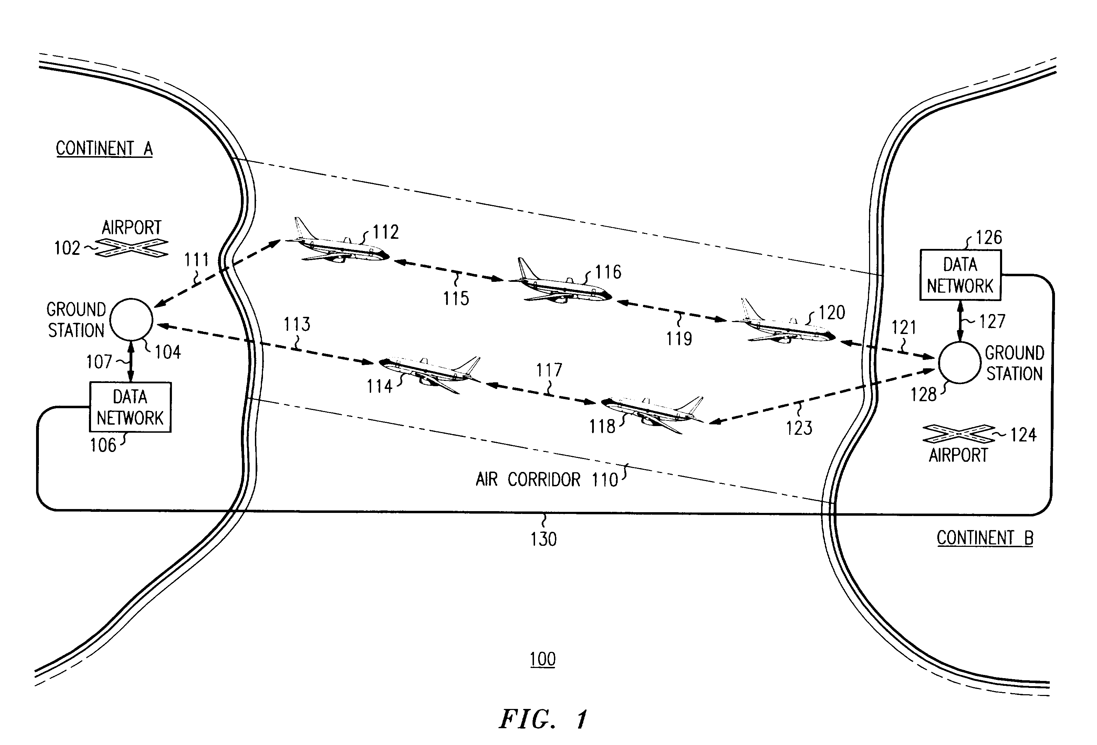

FIG. 1 is a simplified diagram of system 100 for high speed data access system for aircraft. Although aircraft are shown for exemplary purposes, other vehicles (e.g., ships, and automobiles) may be used in alternative systems.

System 100 includes a plurality of aircraft (network points) traveling along an air traffic route served by ground stations (stationary network points) on continents separated by an ocean. More particularly, air traffic route 110 includes aircraft 112, 114, 116, 118 and 120 traveling between continent A and continent B Aircraft 114 and 118 travel in a direction opposite to the other aircraft. Continent A includes airport 102 and is served by ground station 104, which is interconnected to data network 106 via link 107. In this embodiment, ground station 104 is interconnected to aircraft 112 via bi-directional data link 111. Aircraft 112 is interconnected to aircraft 116 via bi-directional data link 115 and aircraft 116 is interconnected to aircraft 120 via bi-directional data link 119. In turn, aircraft 120 is interconnected to ground station 128 on continent B via bi-directional data link 121. In the reverse direction, ground station 104 is interconnected to aircraft 114 via bi-directional data link 113 while the same aircraft is interconnected to aircraft 118 via bi-directional data link 117. Aircraft 118 is interconnected directly to ground station 128 via bi-directional data link 123.

Continent B includes airport 124 and is served by ground station 128. Data network 126 is interconnected to ground station 128 via bi-directional data link 127. Ground stations 104 and 128 serve aircraft flying above or near their respective continents. These ground stations are interconnected to data networks via established data links and allow connectivity to these data networks for airline passengers traveling along air traffic route 110, as described below.

Transcontinental cable 130 permanently interconnects continent A data network 106 with continent B data network 126 providing the primary link between continents and aircraft in corridor 110. Transcontinental cable 130 provides greater total available bandwidth and enhances reliability by providing redundancy to the air links among aircraft. It also provides a direct path for traffic destined for a particular continent.

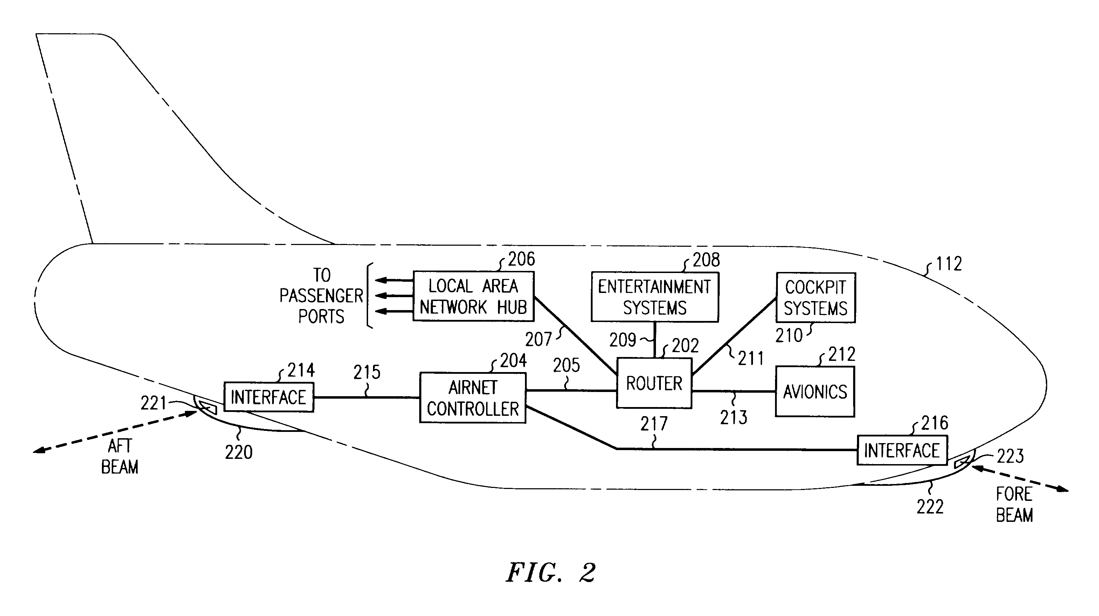

FIG. 2 is a simplified block diagram of equipment in each aircraft shown in FIG. 1 for accommodating high speed data network access via a linear store and forward system. For example, aircraft 112 includes router 202 interconnected to air net controller 204, local area network hub 206, entertainment system 208, cockpit system 210 and avionics system 212 via established links 205, 207, 209, 211 and 213, respectively.

Router 202 is responsible for receiving requests from passengers on board aircraft 112 via local area network hub 206. More particularly, local area network hub 206 is interconnected via established links to each passenger seat equipped with data network access capability. Although only three links are shown, there may be as many links as passenger seats. All data requests from local area network hub 206 are directed to router 202 over link 207. If a passenger requests a stored entertainment program, such as a movie, router 202 accesses entertainment system 208 for the appropriate program and forwards it to the requesting passenger via local area network hub 206. Advantageously, entertainment system 208 can also receive real time digital feeds from music sources, video servers, cable television services from both continents and other entertainment sources found on a data network.

Router 202 also serves cockpit system 210 and avionics system 212 via links 211 and 213, respectively. Router 202 transfers data (including flight recorder data) from avionics system 212 to cockpit system 210 as required by the crew and is initialized with a priority protocol which ensures that all requests from cockpit system 210 or avionics system 212 are served prior to any other request received by the router. Normally, router 202 is not involved in transfers from the avionics system to the cockpit system but only in transfers from these systems to the ground stations.

Air net controller 204 manages bandwidth, performs protocol updates, accomplishes handoffs among aircraft and performs fault recovery operations. Air net controller is interconnected to radiator interface 214 via link 215 and to radiator interface 216 via link 217. Information received or transmitted via aft radiator 220 or fore radiator 222 is received and processed by a radiator interface. Aft radiator 220 extends signals to aircraft or a ground station located behind aircraft 112 while fore radiator 222 extends signals to aircraft or a ground station in front of the aircraft 112. Each radiator is equipped with a steering motor 221, 223 so that it can be positioned to more accurately transmit data. Alternatively, phased array antennas may be used to steer the radiator. The aft and fore links serve to interconnect aircraft 112 to a data network system using line of sight, optical or microwave radio interconnections to other aircraft or ground stations.

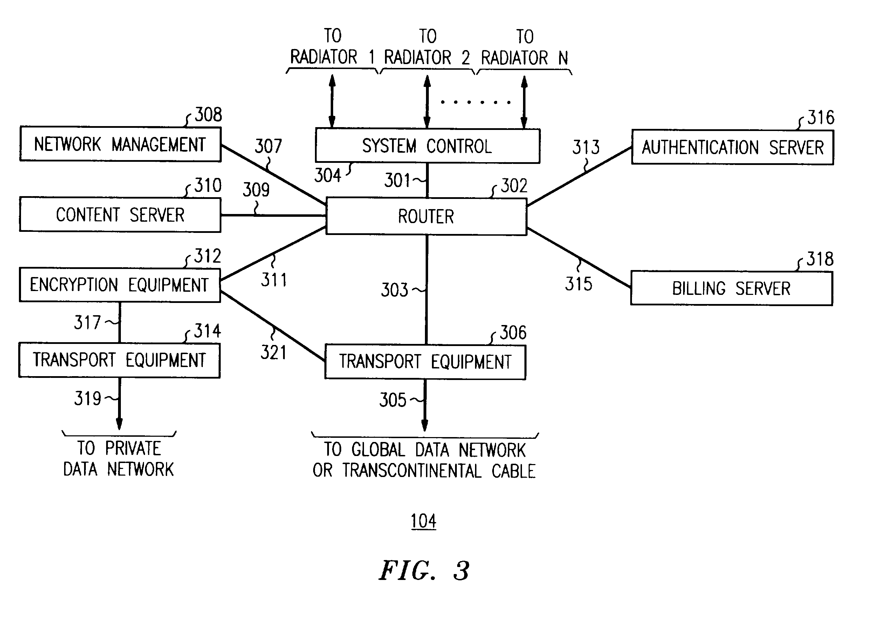

FIG. 3 is a simplified block diagram of a ground station shown in Fig.1. In this example, ground station 104 includes router 302 interconnected to system controller 304 and transport equipment 306 via links 301 and 303, respectively. In this embodiment, system controller 304 manages all links to various radiators from aircraft served by this particular ground station. The number of links which may be served by system controller 304 is limited only by the constraints of the system. In this example, system control 304 serves "N" radiator links from various aircraft within proximity of the ground station wherein each link serves as an anchor link to a chain of many distant aircraft.

All information from system control 304 is forwarded to router 302 via link 301. Transport equipment 306 interconnects this particular ground station to a global data network. Link 305 interconnects the global data network to transport equipment 304. All information from the data network is forwarded to router 302 over link 303. Transport equipment 306 can also terminate to transcontinental cable 130.

This particular ground station is also equipped with network management equipment 308, content server 310, encryption equipment 312 and private data network transport equipment 314. Network management equipment 308, content server 310 and encryption equipment 312 are interconnected to router 302 via links 307, 309 and 311, respectively. Network management equipment 308 monitors all aircraft within a data network chain and operation of the network. Content server 310 is responsible for storing local web pages and entertainment programs.

For aircraft passengers seeking access to a private data network, such as an intranet, requests received in router 302 are forwarded to encryption equipment 312 via link 311 Encryption equipment 312 encodes all of the private data network access transmissions and forwards the data to private data network access transport equipment 314. The private data network access transport equipment 314 is interconnected to a private data network via link 319. In turn, encryption equipment 312 is interconnected to transport equipment 314 via link 317. The separate allocation of transport equipment for private data networks increases confidence that the information exchange with a private data network is secure. However, encryption equipment may also be used in conjunction with access to a global public data network. Accordingly, link 321 interconnects encryption equipment 312 to transport equipment 306.

Use of the ground station (i.e., data access by aircraft passengers) is monitored by authentication server 316 which is interconnected to router 302 via link 313. Authentication server 316 ensures that all access to ground station router 302 is legitimate. Only authorized users with valid accounts or credit cards are allowed to access the network. Billing server 318 is interconnected to router 302 via link 315 and serves to monitor and record ground station use. Each aircraft passenger using data network access facilities may be billed for use of the system.

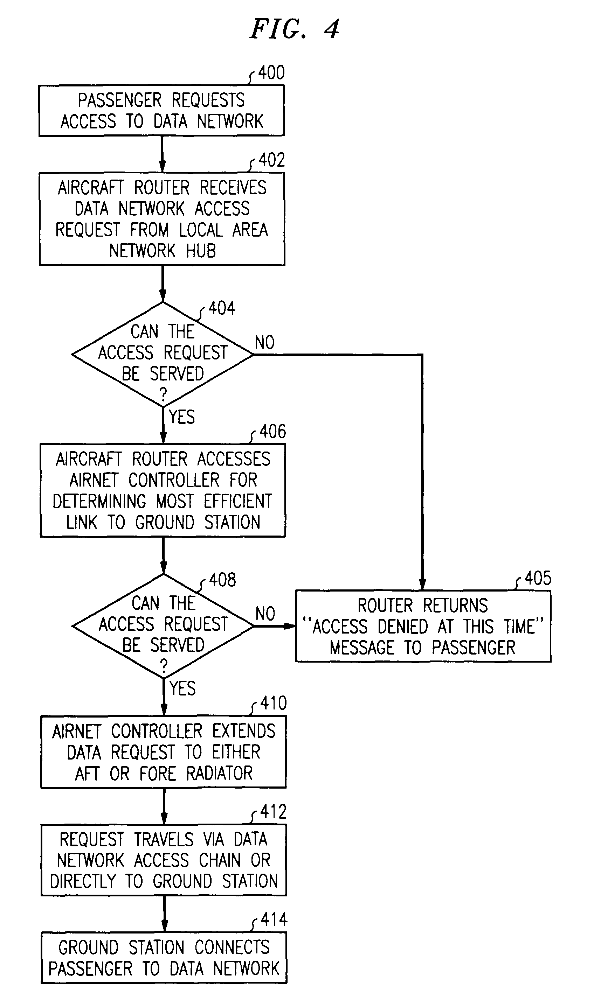

FIG. 4 is a flow diagram illustrating the steps performed in the high speed data access system shown in FIG. 1 for enabling an aircraft passenger to establish connectivity to either a global or private data network.

The process begins in step 400 in which a passenger on a particular aircraft, such as aircraft 116 in FIG. 1, makes a request to access a data network via a port located adjacent to the passenger seat. In step 402, the data network access request is received by the aircraft router from the local area network hub which serves all passengers on the aircraft. In decision step 404, the aircraft router determines whether this particular data network access request can be served. Criteria determining whether the data network access request may be served includes whether the router is currently overloaded with higher priority data requests, such as data requests from the cockpit system or the avionics system. Other criteria include determining if there is adequate bandwidth to service the request and verifying user authority. If the outcome of decision step 404 is a "NO" determination, the process continues to step 405 in which the router returns an access denied message to the passenger. If the outcome of decision step 404 is a "YES" determination, the process continues to step 406 in which the aircraft router accesses the air net controller for determining the most efficient link to a ground station for servicing the request for data network access. In making this determination, the air net controller considers distance to air craft in the foreword and aft directions. If the aircraft serving the passenger is an anchor aircraft (that is, an aircraft with a direct link to the ground station) the distance determination does not need to be made.

The process continues to decision step 408 in which air net controller determines whether the passenger's data network access request can be served. Criteria entering into this decision include whether links to other aircraft and/or the ground station are at full capacity or whether the radiator serving this particular aircraft can handle other data requests. If the outcome of decision step 408 is a "NO" determination, the process continues to step 405 as described above. If the outcome of decision step 408 is a "YES" determination, the process continues to step 410 in which the air net controller extends the data network access request to either an aft or fore radiator for transmission to another aircraft or a ground station. In step 412, the data network access request traverses the data network access chain (that is, is transmitted via links to other aircraft) or directly to a ground station. The links interconnecting the aircraft are preferably optical links which operate in line of sight mode. In alternative embodiments, microwave radio links may also be used. Microwave radio links have the advantage of being able to penetrate low density clouds but require spectral licensing in all jurisdictions in which the aircraft passes and require many channels. In step 414, the ground station receives the data network access request and connects the passenger to a requested data network.

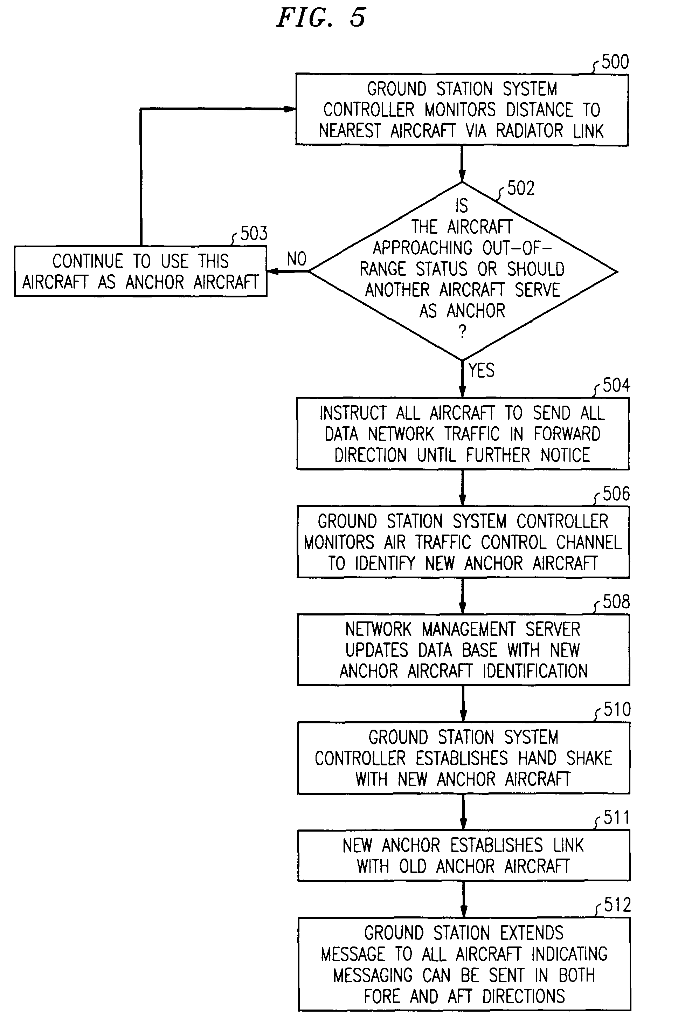

FIG. 5 describes the steps performed in a high speed data network system when an anchor aircraft must relinquish its "anchor" status because it is out of range of the ground station or, a newly airborne aircraft must be added to the chain as an anchor.

The process begins in step 500 in which the ground station system controller monitors the distance between it and its current anchor aircraft via information received from the avionics system of the anchor aircraft over the radiator link. In decision step 502, the ground station determines whether its current anchor aircraft is approaching out-of-range status. Alternatively, decision step 502 may require a determination as to whether another newly airborne aircraft should serve as the anchor because it is closer to the ground station. If the outcome of decision step 502 is a "NO" determination, the process continues to step 503 in which the ground station continues to use this aircraft as an anchor. If the outcome of decision step 502 is a "YES" determination, the process continues to step 504 in which the ground station instructs the current anchor aircraft and all other aircraft in the chain to send all data network traffic in the foreword direction until further notice. For example, in the high speed data access system of FIG. 1, ground station 104 is shown using aircraft 112 and aircraft 114 as its anchor aircraft. In step 504, the ground station directs an anchor aircraft, such as aircraft 112 to extend all data network traffic in a fore direction to aircraft 116 until further notice. The traffic destined for continent A is carried back over the transcontinental link.

In step 506, the ground station system controller monitors air traffic control data to determine another aircraft to serve as the anchor aircraft for the particular air traffic route served by the ground station. In step 508, the ground station network management server updates its database with the new anchor aircraft identification as received in the previous step. In step 510, the ground station system controller establishes a handshake with the new anchor aircraft to ensure that the data network access link is in place. The process proceeds to step 511 in which the new anchor aircraft establishes a link with the old anchor aircraft. In step 512, the ground station extends a message to the old anchor aircraft and all other aircraft in the chain indicating that messaging can now be sent in both the fore and aft directions.

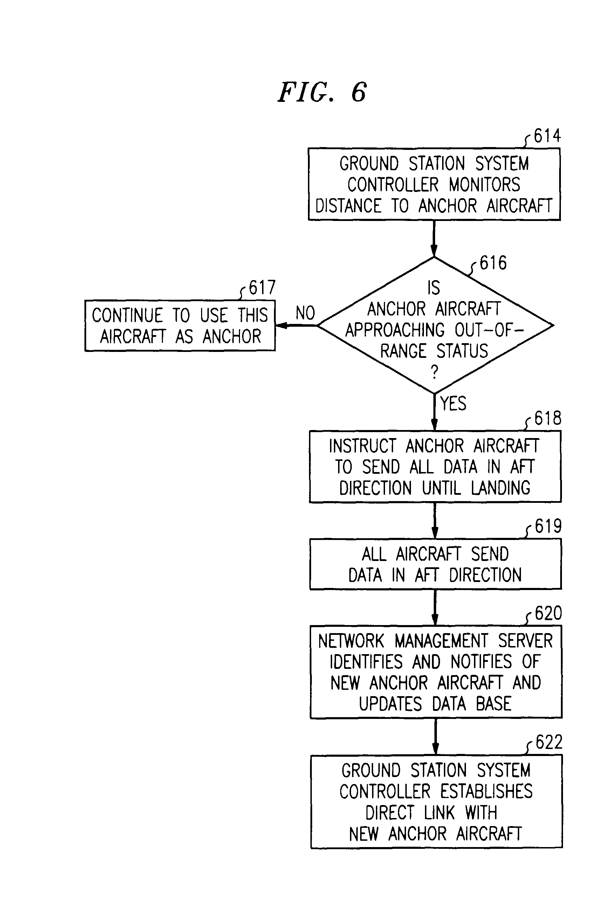

FIG. 6 describes the steps performed in a high speed data network access system when an aircraft is approaching its final destination and is to be removed from the air route in which it previously served as an anchor in the data network chain.

The process begins in step 614 in which the ground station system controller monitors the distance to the anchor aircraft either by connecting to the database which serves air traffic control or by receiving data from the anchor aircraft avionics system. In decision step 616, the ground station determines whether the anchor aircraft is approaching out- of- range status. In this case, out of range status implies that the aircraft is too close to its final destination to continue in the data network chain. If the outcome of decision step 616 is a "NO" determination, the process continues to step 617 in which the ground station continues to use this aircraft as an anchor and the process returns to step 614. If the outcome of decision step 616 is a "YES" determination, the process continues to step 618 the anchor sends all data in an aft direction until standard landing procedures require termination of use of all electronic equipment. Also in this step, a message is sent to all current system users located in the anchor aircraft of imminent shutdown of network access. In step 619, the ground station instructs the anchor aircraft and all other aircraft in the chain to send all data in an aft direction. In step 620, the network management server receives the identification of a new anchor aircraft, updates its database and notifies all aircraft of the new anchor. This new anchor aircraft identification is simply the aircraft immediately behind the previous anchor aircraft which is now in a range to serve as the anchor aircraft for this particular data network chain. In step 622, the ground station system controller establishes a direct link with a new anchor aircraft so those passengers within the air traffic route served by the ground station can continue to access a data network.

Advantageously, the high speed data network access system described above enables airline passenger connectivity to data networks without sacrificing the integrity of aircraft navigation systems or without the installation of high priced equipment. In some embodiments, the fight data recorder information (stored in the avionics system) is continuously or periodically downloaded by each aircraft in the chain to the ground station. Thus, if this data should be required, a search for the "black box" is eliminated.

Although this invention has been described with respect to a preferred embodiment, those skilled in the art may devise numerous other arrangements without departing from the scope of the invention as defined in the following claims. For example, ocean liners could also benefit from the system described above. Also, the network described could be used as an alternative to relaying information via transoceanic cable. Airplanes could also serve as base stations for an access network with radiators mounted on stationary objects connecting to the network via passing planes. The described invention also allows airplanes to retain contact with each other and thereby provide alternate routing possibilities for air traffic control.

## Claims

1. A high speed data access system comprising:
a plurality of aircraft interconnected to eachother via high speed data links to a ground station; and
the ground station interconnected to a data network.

2. The system of claim 1 wherein the plurality of aircraft are interconnected via optical data links.

3. The system of claim 1 wherein the ground station includes a router for directing traffic from the aircraft to a global data network.

4. The system of claim 1 wherein the ground station includes a router for directing traffic from an aircraft to a private data network.

5. A ground station comprises:
a controller for receiving data access requests; and
a router interconnected to the controller for directing data access requests to transport equipment interconnected to a data network.

6. The ground station of claim 5 wherein the transport equipment is interconnected to a global data network.

7. The ground station of claim 5 wherein the transport equipment is interconnected to a private data network.

8. The ground station of claim 5 further comprising encryption equipment interconnected to the transport equipment for encrypting data directed to data networks.

9. The ground station of claim 5 further comprising an authentication server for verifying the data request received in the system controller.

10. The ground station of claim 5 further comprising a billing server for generating a record associated with use of the data network access station.

11. An aircraft data system comprising:
a router interconnected to a local area network hub;
an air net controller interconnected to the router and at least one radiator interface; and
a radiator interconnected to a radiator interface for transmitting data between a data network and a passenger served by the air net controller, router and local area network hub.

12. The aircraft system of claim 11 further comprising a cockpit system interconnected to the router, wherein the cockpit system receives priority service from the router.

13. The aircraft system of claim 11 further comprising an avionics system interconnected to the router, wherein the avionics system receives priority service by the router.

14. The aircraft system of claim 11 further comprising an entertainment system interconnected to the router wherein the router provides data from the entertainment system to ports interconnected to the local area network hub.

15. The aircraft system of claim 11 wherein the aircraft is interconnected to another aircraft via an optical data link.

16. The aircraft system of claim 11 wherein the aircraft is interconnected to a ground station via an optical data link.

17. The aircraft system of claim 11 wherein the aircraft is interconnected to another aircraft via a radio link.

18. The aircraft system of claim 11 wherein the aircraft is interconnected to a ground station via a radio link.

19. A radiator positioned on a moving vehicle comprises:
means for receiving data from a system within the vehicle; and
means for positioning the radiated beam in various directions for transmitting the data received from the system.

20. The radiator of claim 19 wherein the means for receiving the data is a radiator interface.
